# EUROPEAN PATENT APPLICATION

(11) **EP 3 957 849 A2**
(43) Date of publication of application: **23.02.2022**
(21) Application number: 20782368.3
(22) Date of filing: 20.04.2020
(51) Int. Cl.: F03D 3/04, F03D 9/25, H02S 10/12

(54) **WIND TURBINE**

(30) Priority: 05.04.2019 RU 2019110206
(71) Applicant: Kriulin, Yurii Valentinovitch, g. Irkutsk 664023 (RU); Boiko, Valentin Vasilevitch, Mescherino village, 142856 (RU); Chufistov, Sergey Viktorovitch, Moscow, 105066 (RU)
(72) Inventor: Kriulin, Yurii Valentinovitch, g. Irkutsk 664023 (RU); Boiko, Valentin Vasilevitch, Mescherino village, 142856 (RU); Chufistov, Sergey Viktorovitch, Moscow, 105066 (RU)
(74) Representative: Gevers Patents
(86) International application number: PCT/RU2020/000122
(87) International publication number: WO 2020/204757

(57) **Abstract**

The utility model relates to alternative energy. The present wind turbine includes a symmetrical housing, which tapers from a lower part to an upper part and has a hemispherical fairing mounted thereabove, and lateral ribs which are vertically fastened on the housing and on which is fastened an annular fairing with a convex outer surface, a multi-bladed wind impeller being rigidly fastened inside of said annular fairing on a vertical electric generator shaft, wherein the hemispherical fairing has an aerodynamic annular baffle fastened in the lower part thereof, and the hemispherical fairing is configured to have a diameter greater than the diameter of the annular fairing with a convex outer surface. The utility model is aimed at increasing the speed of an air stream passing through the plane of rotation of a wind impeller while simultaneously preventing meteorological precipitation and foreign objects from entering the plane of rotation of the wind impeller.

## Description

The proposed utility model relates to alternative energy that uses air to rotate a wind wheel installed in a wind power plant to generate electricity under various, even the most unfavorable weather conditions (rain and snow, hail, hurricane).

Known wind power plant, selected as an analogue of the claimed utility model, according to patent RU 2644000 C1, published 06.02.2018, in which the wind turbine body is made in the form of a ball. In order to increase the speed of the air flow from the lower part of the wind turbine to the area of reduced pressure on the upper part of the fairing, the guiding ribs are made with an inclination, which facilitates the movement of air and its rotation from the horizontal direction to the vertical direction to pass through the plane of rotation of the wind wheel. Unfavorable weather conditions, wind, snow and rain, foreign objects lifted into the air by a strong wind, etc., reduce the performance of the wind power plant due to the possibility of meteorological precipitation getting into the plane of rotation of the wind turbine.

The closest analogue (prototype) of the claimed utility model in terms of the combination of features and the achieved result is a wind power plant according to patent EA 023719 B1, published on July 29, 2016. The body of the known wind power plant is made tapering from the bottom to the top. The fairing has a hemispherical shape, and in the upper part of which a vacuum is created from the action of the wind flow, similarly to the convex side of an aircraft wing. Air masses move from the lower part of the hull, where the pressure is higher than the kinetic energy of the wind, through the plane of the wind wheel, fixed with an electric generator, rotating it, to the upper part to the fairing, where the pressure is reduced. Unfavorable weather conditions, multidirectional wind, snow and rain, foreign objects, blown into the air by strong winds, etc. complicate the operation of the wind power plant. To ensure normal operating conditions and eliminate the ingress of meteorological precipitation into the plane of rotation of the wind wheel, the fairing is moved along telescopic struts down close to the annular fairing, thereby blocking the access of precipitation and foreign objects. The disadvantage of the known technical solution is the low pressure drop between the fairing and the body, which does not ensure the movement of air at high speed through the plane of the wind wheel, and this limits the performance of the wind power plant. the fairing is moved along the telescopic struts down close to the annular fairing, thereby blocking the access of precipitation and foreign objects. The disadvantage of the known technical solution is the low pressure drop between the fairing and the body, which does not ensure the movement of air at high speed through the plane of the wind wheel, and this limits the performance of the wind power plant. the fairing is moved along the telescopic struts down close to the annular fairing, thereby blocking the access of precipitation and foreign objects. The disadvantage of the known technical solution is the low pressure drop between the fairing and the body, which does not ensure the movement of air at high speed through the plane of the wind wheel, and this limits the performance of the wind power plant. The technical problem to be solved by the declared utility model is to increase the efficiency of the wind power plant.

The technical result consists in increasing the speed of the air flow passing through the plane of rotation of the wind wheel, while protecting against the ingress of meteorological precipitation and foreign objects into the plane of rotation of the wind wheel.
To increase the speed of the air flow passing through the plane of rotation of the wind turbine, increase the productivity of the wind turbine, while protecting against the ingress of meteorological precipitation and foreign objects into the plane of rotation of the wind turbine, create additional vacuum in the upper part of the claimed wind power plant. To do this, an aerodynamic flap in the form of a ring is attached to the lower part of the hemispherical fairing, which creates an additional vacuum when air flows around it and closes the side space between the upper hemispherical fairing and the annular fairing with a convex outer surface of the wind power plant. The aerodynamic flap of the hemispherical fairing creates an additional vacuum area above the plane of rotation of the wind wheel,

The utility model is described in more detail using an example and is accompanied by corresponding drawings, in which:
Fig. 1 is a general side view of a wind power plant;
Fig. 2 is a cross-sectional side view of a wind power plant and the basic structure of an annular aerodynamic shield;
Fig.3 is a schematic diagram of the movement of air masses relative to a working wind power plant;
Fig. 4 is a schematic diagram of the operation of a wind power plant under adverse weather conditions

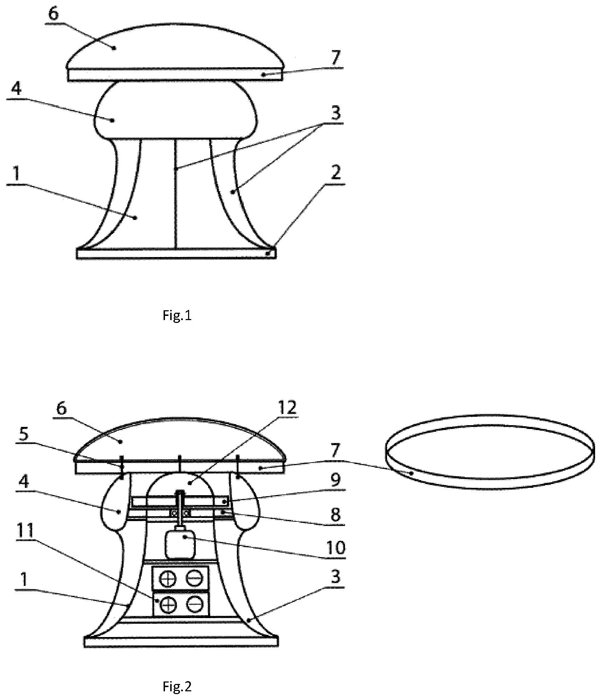

The wind power plant (Fig. 1) consists of a body 1, tapering from the bottom to the top, mounted on a shock-absorbing base 2. On the body 1, side surfaces - ribs 3 are vertically fixed, which, together with the tapering body 1, act as an open flow path for the oncoming air flow. Side ribs 3 in the upper part of the body 1 abut against an annular fairing 4 with a convex outer surface, on the posts 5 of which a hemispherical fairing 6 is fixed, in the upper convex part of which, when exposed to wind, a vacuum is created, having an annular aerodynamic shield 7 in its lower part. In this case, the diameter of the hemispherical fairing 6 with the aerodynamic flap 7 exceeds the diameter of the annular fairing 4 with a convex outer surface. On the inner side of the annular fairing 4 with a convex outer surface on the base 1, a stationary guide vane 8 is rigidly fixed, above which a multi-blade wind wheel 9 is fixed in the immediate vicinity, rigidly mounted on the vertical shaft of the electric generator 10, which is electrically connected to the battery 11.

The wind turbine works as follows. In the presence of wind, regardless of its direction, air masses, having excess pressure from the kinetic energy of the wind, move to the area of reduced pressure on the hemispherical fairing 6 and on the annular aerodynamic shield 7 along the tapering symmetric body 1 along the vertical ribs 3 to the fixed blades 8 guide vanes. In the guide vanes 8, the air flow is deflected at an optimal angle, which is in the range from 15 to 20 ° and at this angle passes through the blades of the multi-blade propeller 9, creating aerodynamic forces directed towards the rotation of the propeller 9.

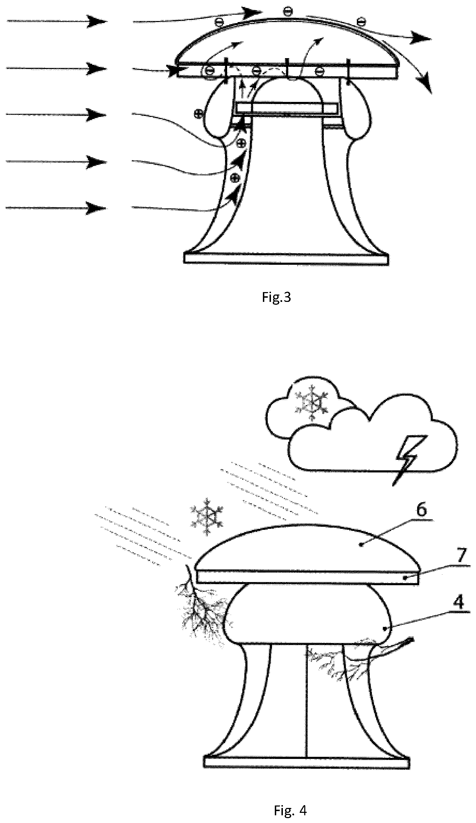

The wind wheel 9 is rigidly fixed on the shaft of the electric generator 10, which, during its rotation, generates electricity, accumulating it in the battery 11 for further transmission to consumers. Having passed the plane of rotation of the wind wheel 9, the air masses continue to move into the area of reduced pressure, which is formed from the wind on the upper part of the hemispherical fairing 6 and on the outer side surface of the annular air shield 7 (Fig. 3).

The outer surfaces of the hemispherical fairing 6, the annular fairing 4 with a convex outer surface, the body 1 are covered with sun-absorbing elements that allow generating electricity from solar radiation regardless of wind speed or in its absence.

A hemispherical fairing 6 with an aerodynamic flap 7, an annular fairing 4 with a convex outer surface, side ribs and a tapering body, provide an increase in the speed of the air flow passing through the plane of the wind turbine of a wind power plant, even in emergency situations: in the event of a hurricane, storm winds, i.e. when the wind speed exceeds 30 m / s, and the presence of foreign objects in the air (Fig. 4).

## Claims

1. A wind power plant, including a symmetrical body, tapering from the bottom to the top, above which a hemispherical fairing is installed, side ribs, vertically fixed on the body, on which an annular fairing with a convex outer surface is attached, inside which a multi-blade a wind wheel, **characterized in that** the hemispherical fairing has an annular aerodynamic flap in its lower part, while the hemispherical fairing with an annular aerodynamic flap is made with a diameter greater than the diameter of the annular fairing with a convex outer surface.

2. Installation according to claim 1, **characterized in that** on the outer surfaces of the hemispherical fairing, side ribs, annular fairing with a convex outer surface, the body, elements for converting solar radiation into electricity are fixed.
